Europäisches Patentamt

European Patent Office

Office européen des brevets

(19)

(11) Numéro de publication: **0 1 1 6 026**
**B1**

(12) **FASCICULE DE BREVET EUROPEEN**

(45) Date de publication du fascicule du brevet:
19.11.87

(51) Int. Cl.⁴: **B 66 D 1/38,** B 66 D 1/50,
G 01 L 5/04 // A01K73/06

(21) Numéro de dépôt: **84870001.9**

(22) Date de dépôt: **03.01.84**

(54) Dispositif de détection de la tension ou force exercée sur un câble ou analogue auquel est par exemple fixé un filet de pêche.

(30) Priorité: **05.01.83 BE 209850**

(43) Date de publication de la demande:
**15.08.84 Bulletin 84/33**

(45) Mention de la délivrance du brevet:
**19.11.87 Bulletin 87/47**

(84) Etats contractants désignés:
**DE FR GB NL**

(56) Documents cités:
**BE - A - 875 382**
**DE - A - 2 301 623**
**DE - A - 3 042 729**
**FR - A - 2 042 544**
**US - A - 2 264 856**
**US - A - 2 303 847**
**US - A - 2 310 597**
**US - A - 3 500 764**
**US - A - 3 801 071**
**US - A - 4 241 616**

(73) Titulaire: **Brusselle, André, Kemmelbergstraat 33,
B-8400 Oostende (BE)**

(72) Inventeur: **Brusselle, André, Kemmelbergstraat 33,
B-8400 Oostende (BE)**

(74) Mandataire: **Vanhamme, Joseph Louis, Office Parette
(Fred Maes) 19 rue Joseph II, B-1040 Bruxelles (BE)**

ACTORUM AG

**Description**

La présente invention concerne essentiellement un dispositif de détection de la tension ou force exercée sur un câble ou analogue auquel est par expemple fixé un filet de pêche.

Une invention antérieure du demandeur décrite dans le brevet belge no 777 453 concerne un guide-câble qui enroule le câble sur le tambour d'un treuil de bateaux de pêche au moyen d'une crémaillère et d'un pignon.

Selon cette invention, le guide-câble 14 est monté sur une traverse unique assurant le guidage de celui-ci. Cette traverse est fixée au bâti 1 du treuil, de manière à pouvoir être démontée facilement.

Le mouvement du chariot 15 est parallèle à l'axe longitudinal du tambour de câble et a lieu suivant une relation fixe par rapport au nombre de tours du tambour et cela grâce au pignon d'attaque 18 qui engrène sur une crémaillère 19 qui transmet à son tour la force transversale au chariot 15. Cette crémaillère peut se déplacer verticalement de façon à permettre un déplacement alternatif du chariot 15 entre les flasques 3a et 3b du tambour 3.

Cette invention donne pleine satisfaction pour guider correctement le câble en toute circonstance.

Cependant, de nouveaux problèmes se posent actuellement dans la pêche moderne en haute mer qui se caractérisent surtout par les deux questions suivantes:

– Quelle est la force qui agit sur les câbles auxquels le filet de pêche est fixé; et
– Quelle est la longuer du câble qui se trouve déroulé hors du navire.

On connaît par le document DE-A-3 042 729 un dispositiv de détection de la tension exercée sur un câble auquel est fixé un objet et répondant au préambule de la revendication 1.

Cependant, le quide-câble de ce dispositif connu est chargé mécaniquement par la force de guidage axiale pour le bobinage du câble 3, la force dans le câble 3 entre le rouleau 6 et le tambour 1 et la force dans le câble 3 entre le rouleau 5 et l'objet. De plus, étant donné que la direction du câble 3 entre l'objet et le rouleau 5 peut se modifier, l'orientation du câble 3 entre le rouleau 6 et le tambour 1 peut varier suivant le nombre de couches sur le tambour. L'ensemble du système de guidage de câble est soumis à des forces importantes agissant sur le câble et avec une orientation variable.

La présente invention a pour but d'éliminer les inconvénients ci-dessus en proposant un dispositif de mesure précis de la tension exercée sur le câble où ledit câble n'est soumis qu'à la force de guidage axiale nécessaire pour le bobinage du câble sur le tambour tandis que la force agissant sur le câble n'agit pas sur le système de guidage et n'a donc aucune influence sur la mesure de force ou de longuer, en cas de modification de la direction du câble , par exemple dans le cas de la pêche, changements de direction dûs aux changements de cap.

Pour cela, le dispositif selon l'invention comporte les caractéristiques décrites dans la partie caractérisante de la revendication 1.

On connaît également par le document US-A-3 801 071 un système de mesure de force et de longueur qui s'applique à une commande de treuil de manière à maintenir une traction et/ou une longueur constantes entre un remorqueur et un objet remorqué, lequel système, à trois rouleaux, est monté séparément et d'une manière fixe en dehors du treuil. Toutefois, ce document antérieur ne se préoccupe pas des problèmes résultant de l'existence du système de mesure à rouleaux et d'un dispositif guide-câble qui serait eventuellement associé au tambour. De plus, le système de mesure à trois rouleaux de ce document antérieur ne permet en aucun cas de résoudre le problème à la base de l'invention.

La présente invention apparaîtra clairement à la lumière de la description explicative qui va suivre faite en référence aux figures annexées représentant le mode de réalisation actuellement préféré de l'invention donné simplement à titre d'exemple et qui ne saurait donc en aucune façon limiter la portée de l'invention. Dans les dessins:

La figure 1 est une vue latérale du chariot de guide-câble modifié par rapport au guide-câble connu de manière à comporter le dispositif de détection objet de la présente invention;

La figure 2 est une vue selon la flèche II de la figure 1 constituant une vue de dessus du dispositif de détection selon la présente invention, le chariot guide-câble situé en-dessous de ce dispositif n'étant pas représenté pour une meilleure clarté du dessin; et

la figure 3 est un dessin de principe indiquant le parcours du câble sur le dispositif de détection selon la présente invention à plusieurs rouleaux et de préférence à trois rouleaux selon le mode de réalisation actuellement préféré représenté.

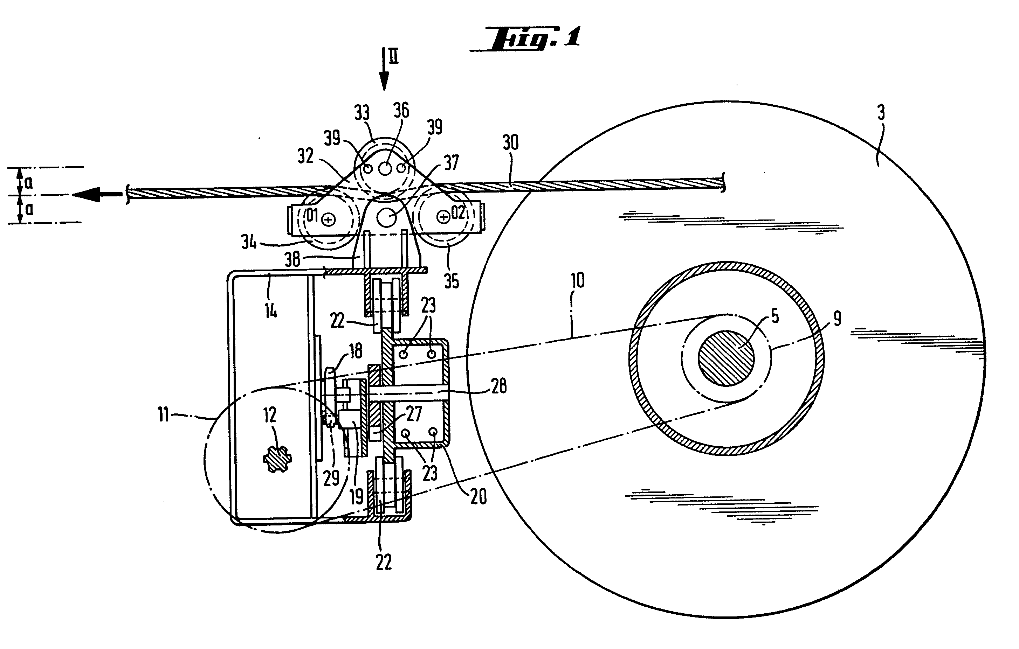

En référence aux figures 1 à 3, un dispositif selon la présente invention de détection de la tension ou force exercée sur un câble 30 ou analogue, auquel est par exemple fixé un filet de pêche, est caractérisé en ce qu'il comprend un système à plusieurs rouleaux 33, 34 et 35, ou poulies, au moins un 33 desdits rouleaux est disposé d'un côté du câble 30 et au moins un autre 34, 35 desdits rouleaux est disposé de l'autre côté dudit câble 30. L'un 33 desdits rouleaux est pourvu d'une cellule de mesure (non représentée) de la tension ou force exercée sur le câble 30.

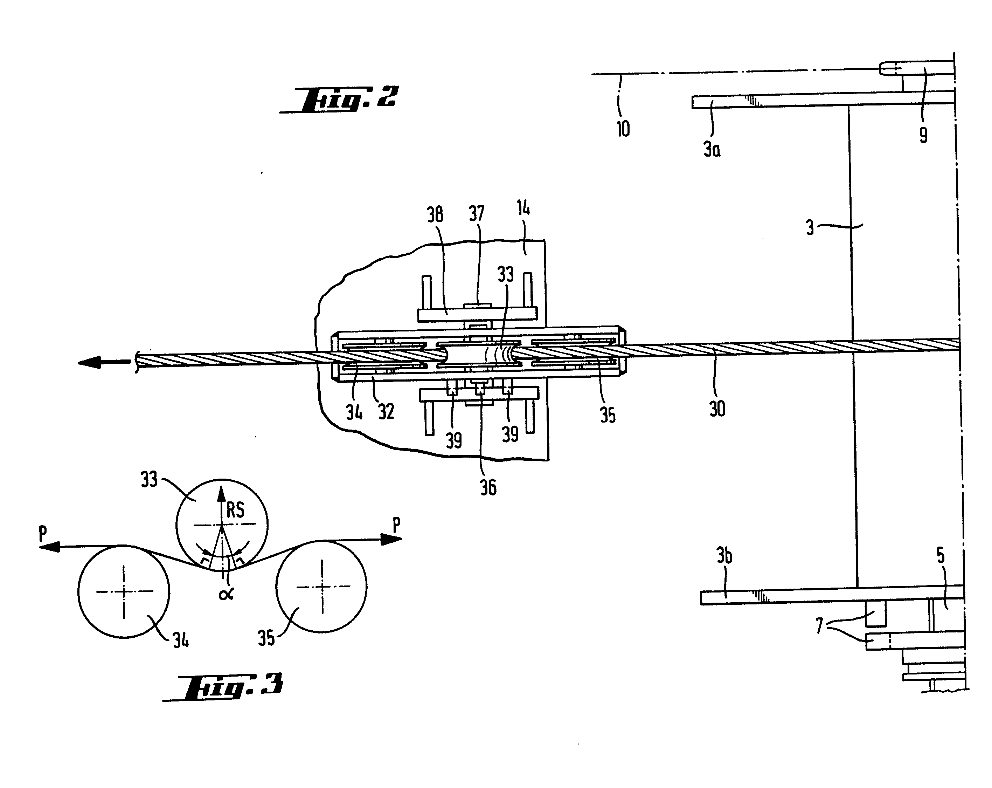

Cette cellule de mesure est de préférence incorporée dans l'axe 36 du rouleau 33 et est formée par des détecteurs de tension tout à fait classiques. Un tel dispositif d'axe de rouleau, réalisé creux pour comporter à l'intérieur une cellule de mesure de la tension exercée sur le rouleau par le câble est tout à fait classique et disponible sur le marché sans problème. C'est pour cela que cette cellule de mesure n'est pas décrite plus en détail. Ainsi, dans ce dispositif la cellule de mesure mesure la résultante RS de la force P dans le câble 30 (voir figure 3).

Selon une caractéristique préférée du dispositif de détection selon l'invention, les rouleaux (33, 34, 35) sont disposés en relatioin fixe les uns par rapport aux autres et sont disposés sensiblement dans un même plan comme cela se voit clairement en référence aux figures 1 à 3.

D'autre part, de préférence, les rouleaux (33, 34, 35) sont montés sur un cadre rigide 32.

Ce cadre rigide 32 est de préférence monté en rotation selon un axe de rotation 37 qui est perpendiculaire aux plans des rouleaux comme cela se conçoit bien à partir de la figure 2.

Selon une caractéristique préférée de l'invention, le dispositif de détection comprend au moins deux rouleaux 34, 35 disposés d'un côté du câble et de préférence dessous le câble, comme clairement visible aux figures 1 à 3, et au moins un rouleau 33 disposé de l'autre côté du câble 30, de préférence au-dessus du câble, l'axe de rotation 37 du cadre rigide 32 se trouve avantageusement sur la droite $O_1 O_2$ définie par les axes de rotation des deux rouleaux 34, 35 disposés sous le câble.

Selon une autre caractéristique préférée de l'invention, les deux rouleaux 34, 35 situés audessous du câble 30 sont disposés sensiblement symétriquement par rapport au rouleau 33 situé au-dessus du câble 30, dit rouleau central tandis que l'axe de rotation 37 ou de basculement du cadre rigide 32 est situé sensiblement dans ce plan de symétrie.

Selon une autre caractéristique préférée de l'invention, le dispositif de détection comprend en outre des détecteurs 39 mesurant le nombre de tours de rotation de l'un des rouleaux, de préférence le rouleau 33 comportant la cellule de mesure de la tension du câble de manière à mesure le nombre de tours de ce rouleau et donner par conséquent une indication de la longueur de câble déroulé.

Selon une autre caractéristique préférée, le cadre rigide 32 est monté sur un guide-câble, et de préférence sur le chariot du guide-câble, par exemple en étant fixé solidement à des plaques support 38 qui constituent elles-mêmes un tout avec le chariot du guide-câble.

Le guide-câble et son chariot sont selon le mode de réalisation préféré constitués par la structure connue décrite ci-dessous.

Ainsi, le tambour du treuil 3 est entraîné en rotation par une grande roue dentée (non représentée) entraînée au moyen d'un pignon qui reçoit son mouvement d'un moteur électrique ou hydraulique d'entraînement du treuil.

La grande roue est clavetée sur un arbre principal 5 monté d'un côté dans le réducteur et de l'autre côté dans le bâti et qui porte le tambour 3 au moyen de buselures ou de manchon.

L'accouplement tambour 3-chariot guidecâble est aussuré par exemple par une roue dentée 9 solidaire du tambour 3 et qui entraîne par le moyen d'une chaîne 10 une deuxième roue dentée 11 fixée sur l'arbre 12 d'entraînement du guide-câble. Cet arbre 12 est cannelé et eintraîne en mouvement de rotation une vis sans fin 13 tout en permettant un glissement longitudinal de la vis sans fin 13 sur cet arbre 12. La vis sans fin 13 est logée dans un réducteur 14 du chariot du guidecâble. Elle entraîne une roue 16 fixée sur un arbre 17 logé dans ce même réducteur. Un pignon d'attaque 18 est fixé sur l'arbre 17 de façon à entraîner dans le mouvement de va-et-vient alternatif parallèlement à l'axe du tambour 3 le chariot enroulant sur les dents 29 d'une crémaillère 19.

Le chariot est suspendu par quatre rouleaux 22 qui guident ce chariot en permettant le mouvement de translation.

Ces quatres rouleaux 22 sont guidés sur une traverse unique 20 placée hors du champ de passage du câble qui vient s'enrouler sur le tambour 3 ou qui se déroule dudit tambour. Cette traverse 3 est fixée par exemple au moyen de boulons 23 à ses deux extrémités dans le bâti 1.

La crémaillère 19 transmet l'effort du pignon d'attaque 18 directement à la traverse 20 grâce à la prévision de deux guides verticaux 24 soudés sur la traverse 20 qui prennent appui contre deux rouleaux 25 qui tournent sur des pivots 26 fixés dans la crémaillère 19. Ces rouleaux 25 s'engagent dans des encoches 27a de deux secteurs dentés 27 qui s'engrènent mutuellement en 27b et qui pivotent autour des pivots 28 fixés dans la traverse 20. Les secteurs 27 tournent ainsi d'un angle limité autor des pivots 28 et dans ce mouvement de rotation ils font monter ou baisser verticalament d'une quantité déterminée 2h les pivots 26 des rouleaux 25 et par conséquent, la crémaillière 19. Ce mouvement vertical de la crémaillère 19 permet d'inverser le mouvement de translation du chariot du fait que le pignon 18 passe par-dessus la crémaillère s'il était dessous ou par-dessus s'il était dessus.

On conçoit ainsi que selon la présente invention, le cadre rigide 32 comportant le dispositif de détection selon la présente invention peut tourner autour de l'axe 37 dans un plan perpendiculaire à l'axe longitudinal du tambour 3 de câble 30 du treuil de pêche.

Ce mouvement de basculement permet de maintenir constant l'angle de contact ou sur le rouleau 33, lorsque le câble agit sur le fût ou sur la couche la plus extérieure du tambour 3. Par conséquent, la droite $O_1 O_2$ passant par le centre de l'axe 37 s'adapte aussi automatiquement obliquement sur la résultante RS de la force P dans le câble 30.

De ce fait, le câble 30, qui va vers l'arrière du navire, reste presque horinzontal parce qu'on conçoit aisément que la distance du câble 30 jusqu'à l'arrière du navire est beaucoup plus grande que la distance des trois rouleaux 33, 34, 35 jusqu'au tambour 3. En effet, le dispositif guidecâble supportant le dispositif de détection selon la présente invention est réalisé près du tambour 3 du treuil.

La ligne se déroulant vers l'arrière se déplace donc d'une manière pratiquement parallèle sur une distance 2a par rapport à la figure 1.

Il résulte donc de ce qui précède que l'avantage technique primordial propre à la présente invention réside dans le fait que l'on réalise un système de mesure dans lequel le guidage du câble 30 reste assuré sur les deux tambours 3 de câble du treuil de pêche et donne une mesure de la force exercée sur la ligne et de la longueur de câble déroulé sans qu'ils n'apparaissent des différences dues à leur disposition.

## Revendications.

1. Dispositif de détection de la tension ou force exercée sur un câble (30), auquel est par exemple fixé un filet de pêche, comprenant un système à plusieurs rouleaux (33, 34, 35) ou poulies montés sur un cadre rigide (32) d'un guide-câble en relation fixe les uns par rapport aux autres et disposés sensiblement dans un même plan perpendiculaire à l'axe longitudinal du tambour de câble d'un treuil d'un bateau de pêche, l'un (33) des rouleaux comprenant une cellule de mesure de la tension du câble et des détecteurs (39) mesurant le nombre de tours de rotation dudit rouleau (33) caractérisé en ce qu'au moins un (33) desdits rouleaux est disposé d'un côté du câble (30) et au moins un autre (34,35) desdits rouleaux est disposé de l'autre côté du câble (30) et en ce que le cadre rigide (32) est monté tournant autour d'un axe de rotation (37), perpendiculaire au plan des rouleaux, sur le guide-câble, de préférence sur le chariot du guide-câble enroulant le câble (30) sur le tambour (3) du treuil.

2. Dispositif de détection selon la revendication 1, caractérisé en ce qu'il comprend au moins deux rouleaux (34, 35) disposés d'un côté du câble (30) et de préférence dessous le câble (30); et au moins un rouleau (33) disposé de l'autre côté du câble (30) et en ce que l'axe de rotation (37) du cadre rigide (32) se trouve de préférence sur la droite $0_1\,0_2$ définie par les axes de rotation des deux rouleaux (34, 35) disposés dessous le câble (30).

3. Dispositif de détection selon la revendication 1 ou 2, caractérisé en ce que les deux rouleaux (34, 35) situés au-dessous du câble sont disposés sensiblement symétriquement par rapport au rouleau (35) situé au-dessus du câble, dit rouleau central qui comporte la cellule de mesure et les détecteurs précités, tandis que l'axe de rotation (37) du cadre rigide (32) fest situé sensiblement dans le plan de symétrie.

## Patentansprüche

1. Vorrichtung zur Bestimmung der auf einen Kabel ausgeübten Spannung oder Kraft (30), an dem zum Beispiel ein Fischernetz fixiert ist, das mit einem Mehrrollsystem (33, 34, 35) oder mit mehreren, auf einem steifen Rahmen (32) einer Kabelwinde montierten Scheiben versehen ist, die in feststehender Beziehung zueinander stehen, und auf gleicher Höhe senkrecht zur Längsachse der Kabeltrommel der Winde eines Fischerbootes stehen, während eine (33) der Rollen eine Messzelle zur Messung der Kabelspannung und Detektoren (39) zur Messung der Anzahl Drehungen dieser Rolle (33) enthält und sich zumindest eine (33) dieser Rollen auf einer Seite des Kabels (30) befindet, und zumindest eine andere (34, 35) besagter Rollen auf der anderen Seite des Kabels (30) angebracht ist, und der steife Rahmen (32) um eine Rotationsachse (37) drehend montiert ist, senkrecht zur Höhe der Rollen, auf der Kabelwinde, vorzugsweise auf dem Gestell der Kabelwinde, die den Kabel auf der Kabeltrommel (3) aufrollt.

2. Bestimmungsvorrichtung gemäss Forderung 1, mit mindestens zwei Rollen (34, 35), die sich an einer Seite des Kabels (30) und vorzugsweise unter dem Kabel befinden (30); und zumindest einer Rolle (33), die sich auf der anderen Seite des Kabels (30) befindet, während die Rotationsachse (37) des steifen Rahmens (2) sich vorzugsweise auf der Geraden $0_1\,0_2$ befindet, die durch die Rotationsachsen der beiden unter dem Kabel (30) angebrachten Rollen bestimmt wird.

3. Bestimmungsvorrichtung gemäss Forderung 1 oder 2, wobei die beiden unter dem Kabel angebrachten Rollen (34, 35) in symmetrischer Beziehung zur Rolle (35) stehen, die sich über dem Kabel befindet, der sogenannten zentralen Rolle, die o.g. Messzelle und Detektoren enthält, während die Rotationsachse (37) des steifen Rahmens (32) auf Symmetrieebene angebracht ist.

## Claims

1. Detection device for the tension or force applied to a cable (30) to which is fastened for instance a fishing net comprising a system with several rolls (33, 34, 35) or pulleys mounted on a rigid frame (32) of a cable guide in stationary relationship towards each other and mounted essentially in the same plane perpendicular to the longitudinal axis of the cable drum of a fishing boat winch, whereby one (33) of the rolls comprises a measuring cell for the cable tensin and detectors (39) measuring the number of revolutions of said roll (33), characterized by the fact that at least one (33) of said rolls is mounted on one side of the cable (30) and at least one other (34, 35) of said rolls is mounted on the other side of the cable (30) and that the rigid frame (32) is rotatably mounted on a rotation axis (37) perpendicular to the roll plane on the cable guide and preferably on the carriage of the cable guide which is winding the cable (30) on the winch drum (3).

2. Detection device according to claim 1, characterized by the fact that it comprises at least 2 rolls (34, 35) mounted on one side of the cable (30) and preferably underneath the cable (30) and at least one roll (33) mounted on the other side of the cable (30) and that the rotation axis (37) of the rigid frame (32) is preferably located on the straight line $0_1\,0_2$ defined by the rotation axis of the two rolls (34, 35) mounted underneath the cable (30).

3. Detection device according to claims 1 or 2, characterized by the fact that the two rolls (34, 35) located underneath the cable are mounted essentially symmetrically towards the roll (35) located underneath the cable, whereby said central roll supports the measuring cell and the said detectors whereas the rotation axis (37) of the rigid frame (32) is located sensibly in the symmetry plane.

Fig. 1

Fig. 2

Fig. 3